# FASCICULE DE BREVET EUROPEEN

(11) **EP 1 885 519 B1**
(45) Date de publication et mention de la délivrance du brevet: **16.05.2012**
(21) Numéro de dépôt: 06764631.5
(22) Date de dépôt: 16.05.2006
(51) Int. Cl.: B23K 1/012, B23K 1/008

(54) **FOUR DE REFUSION AVEC BUSES DE SOUFFLAGE ET ORIFICES D'ASPIRATION SEPARES ET INTERCALES**
REFLOW-OFEN MIT GETRENNTEN, ABWECHSELNDEN BLASDÜSEN UND SAUGLÖCHERN
REFLOW OVEN COMPRISING SEPARATED, ALTERNATING BLOW NOZZLES AND SUCTION HOLES

(30) Priorité: 30.05.2005 FR 0505430
(43) Date de publication de la demande: 13.02.2008
(73) Titulaire: VIT, 06370 Mouans Sartoux (FR)
(72) Inventeur: BOUMENDIL, Jean-Jack, F-06480 La Colle Sur Loup (FR)
(74) Mandataire: Parzy, Benjamin Alain
(86) Numéro de dépôt international: PCT/FR2006/001094
(87) Numéro de publication internationale: WO 2006/128985

(56) Documents cités:
- US-A- 5 964 044
- PATENT ABSTRACTS OF JAPAN vol. 2003, no. 03, 5 mai 2003 (2003-05-05) -& JP 2002 331357 A (TAMURA SEISAKUSHO CO LTD; TAMURA FA SYSTEM CO LTD), 19 novembre 2002 (2002-11-19)

## Description

L'invention concerne un four de refusion, notamment pour le soudage de composants électroniques sur des cartes à circuit imprimé.

### ARRIERE-PLAN DE L'INVENTION

On connaît des fours de refusion pour souder des composants sur une carte à circuit imprimé comportant une enceinte de chauffage délimitée par une paroi sur laquelle débouchent des buses de soufflage d'air chaud.

L'enceinte a la forme générale d'un tunnel.

Dans un premier type connu de four de refusion, l'air est aspiré par les côtés de l'enceinte, un circuit fermé renvoyant l'air dans l'enceinte par les buses de soufflage, après chauffage de l'air. Cette disposition comporte l'inconvénient que l'air soufflé par les buses de soufflage centrales forme sur la carte un matelas de fluide qui empêche l'air soufflé par les buses de soufflage périphériques d'atteindre également la carte. L'apport de chaleur est ainsi plus élevé au centre de la carte que sur ses côtés, ce qui peut conduire à une température hétérogène de la carte, voire, si la différence de température est trop importante, à des déformations de la carte.

On connaît également des fours de refusion dans lesquels les orifices d'aspiration sont annulaires et s'étendent concentriquement aux buses de soufflage. L'air chaud soufflé par l'une des buses de soufflage bute sur la carte à circuit imprimé puis est aspiré par l'orifice d'aspiration annulaire de sorte que la surface de la carte à circuit imprimé balayée par l'air chaud présente une étendue radiale limitée qui ne dépasse guère le diamètre de l'orifice d'aspiration de sorte que si les flux sont tangents pour ne pas se recouvrir, il reste des zones mortes qui ne sont pas atteintes par le flux d'air chaud en provenance des buses de soufflage, de sorte que l'apport de chaleur est hétérogène.

On connaît en outre, des documents JP 2002331357 A US 5,584,237, WO 03/006390 ou US 5,964,044 des fours dans lesquels les buses de soufflage sont séparées des orifices d'aspiration, les buses de soufflage et les orifices d'aspiration étant disposés en lignes qui forment des rampes. Cependant, cette disposition en ligne a l'inconvénient de générer soit des recouvrements des flux d'air, soit des zones mortes non balayées par l'air.

### OBJET DE L'INVENTION

L'invention a pour objet un four de refusion dans lequel la carte à circuit imprimé est chauffée de façon plus homogène que dans les fours connus.

### BREVE DESCRIPTION DE L'INVENTION

En vue de la réalisation de ce but, on propose un four de refusion selon la revendication 1 dans lequel, selon l'invention, les buses de soufflage et les orifices d'aspiration sont séparés et disposés sur la paroi pour être intercalés les uns par rapport aux autres selon un motif régulier définissant des cellules sans recouvrement ni zone morte.

L'utilisation d'un motif formant des cellules de préférence à une disposition en ligne permet d'assurer une plus grande homogénéité de la température.

Chaque cellule comporte un centre et des sommets qui sont communs à des cellules adjacentes, dans laquelle :
- le centre est occupé par une buse de soufflage et les sommets par des orifices d'aspiration, ou
- le centre est occupé par un orifice d'aspiration et les sommets par des buses de soufflage.
- les orifices d'aspiration (6) sont disposés selon un motif formant des cellules hexagonales.

### BREVE DESCRIPTION DES DESSINS

L'invention sera mieux comprise à la lumière de la description qui suit en référence aux figures des dessins annexés parmi lesquelles :
- la figure 1 est une vue en perspective partiellement écorchée d'un four de refusion selon un mode particulier de réalisation de l'invention ;
- la figure 2 est une vue en coupe selon la ligne II-II de la figure 1, prise au niveau des orifices d'aspiration, les épaisseurs des tôles constitutives ayant été exagérées ;
- la figure 3 est une vue en coupe selon la ligne III-III de la figure 1, prise au niveau des buses de soufflage, les épaisseurs de tôles constitutives ayant été exagérées ;
- la figure 4 est une vue selon la flèche F de la figure 2 d'une portion de la paroi interne de l'enceinte du four ;
- la figure 5 est une vue analogue à la figure 4 d'un mode préféré de réalisation de l'invention.

### DESCRIPTION DETAILLEE DE L'INVENTION

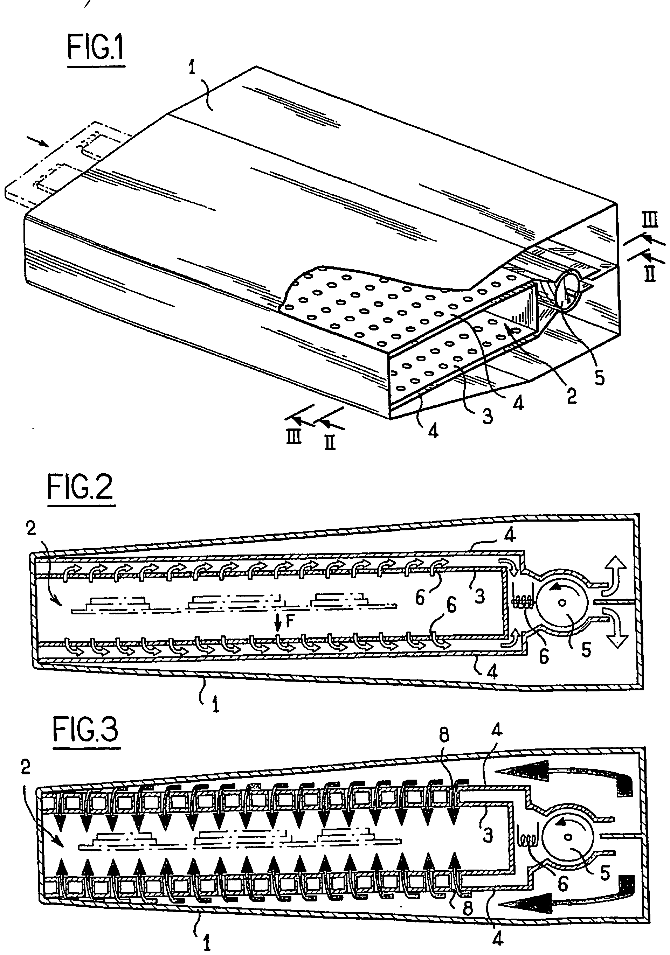

En référence à la figure 1, le four de refusion de l'invention a une forme générale de tunnel et comporte un carénage 1 dans lequel s'étend une enceinte 2 comportant une paroi interne 3 de section courante en U ayant deux faces en regard. La partie ouverte de la paroi interne 3 s'étend contre le carénage 1 pour délimiter avec ce dernier une cavité de section rectangulaire. Des cartes à circuit imprimé (l'une d'elle est figurée en traits mixtes) sont introduites dans l'enceinte 2 par l'une des extrémités de celle-ci et évacuées par l'autre des extrémités. Des volets non représentés permettent de fermer sélectivement les extrémités de l'enceinte 2.

Deux écrans 4 s'étendent de part et d'autre de la paroi interne 3 parallèlement aux faces en regard de la paroi interne 3, et se prolongent au delà de l'extrémité de la paroi interne 3 pour définir un logement dans lequel une turbine 5 est montée pour tourner.

Comme cela est visible à la figure 2, les faces en regard de la paroi interne 3 sont percées d'orifices d'aspiration 6 (seuls deux sont référencés sur la figure) pour permettre à l'air présent dans la cavité de passer au travers de la paroi interne 3 sous l'effet de la dépression générée par la turbine 5. L'air ainsi aspiré est canalisé entre la paroi interne 3 et les écrans 4 pour passer au voisinage d'un organe de chauffage 6 avant d'aboutir à la turbine 5.

L'air ainsi chauffé est éjecté par la turbine 5 pour être canalisé entre l'extérieur des écrans 4 et le carénage 1. Comme cela est visible à la figure 3, des tubes 8 (seuls deux sont référencés sur la figure) s'étendent entre les écrans 4 la paroi interne 3 pour permettre le passage de l'air chaud depuis l'extérieur des écrans 4 vers l'intérieur de l'enceinte 2. Les tubes 8 forment ainsi des buses de soufflage d'air chaud qui débouchent sur les faces en regard de la paroi interne 3.

L'air chaud soufflé par les buses de soufflage 8 atteint la carte à circuit imprimé, balaie une portion de la surface de celle-ci pour lui transmettre une partie de sa chaleur, puis est aspiré par les orifices d'aspiration 6, de sorte que l'air circule en circuit fermé.

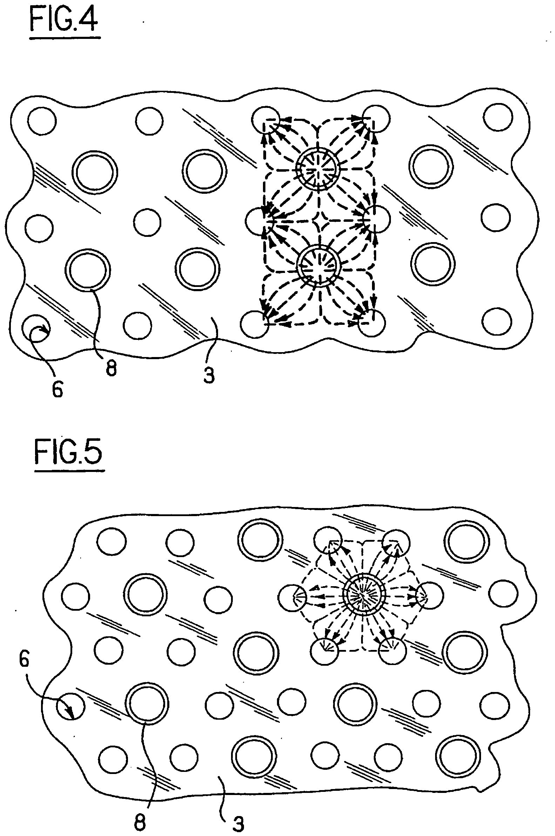

Comme cela est visible à les figures 4 et 5, et conformément à l'invention, les orifices d'aspiration 6 et les buses de soufflage 8 sont séparés et disposés sur les faces en regard de la paroi interne 3 de l'enceinte 2 pour être intercalés les uns par rapport aux autres, de sorte qu'une buse de soufflage 8 soit adjacente à plusieurs orifices d'aspiration 6 et qu'un orifice d'aspiration soit adjacent à plusieurs buses de soufflage 8 pour définir un motif régulier de cellules sans recouvrement ni zone morte.

Sur la figure 4, les buses de soufflage 8 et les orifices d'aspiration 6 sont agencés selon un motif carré. Les lignes de flux d'air sortant de deux des buses sont tracées en pointillés sur la figure 4. L'air sortant de l'une des buses est aspiré par les orifices d'aspiration adjacents (ici quatre orifices par buse). L'air chaud balaie ainsi une surface carrée qui dépasse largement le diamètre de la buse. Les surfaces balayées par l'air sortant de deux buses voisines sont contiguës mais ne se recouvrent pas. L'apport de chaleur à la carte à circuit imprimé est ainsi particulièrement homogène.

De préférence les buses sont disposées selon l'agencement illustré à la figure 5 dans lequel les buses de soufflage 8 et les orifices d'aspiration 6 sont agencés selon un motif hexagonal. On a représenté en pointillés les lignes de flux d'air sortant de l'une des buses. De façon similaire au mode de réalisation précédent, L'air chaud balaie ainsi une surface hexagonale qui dépasse largement le diamètre de la buse. Les surfaces balayées par l'air sortant de deux buses voisines sont contiguës mais ne se recouvrent pas. De préférence, pour une hauteur de soufflage de 40 mm, les buses de soufflage ont un diamètre de 10 mm et les trous d'aspiration ont un diamètre de 8 mm selon un pas de 32 mm.

L'invention n'est pas limitée à ce qui vient d'être décrit, mais bien au contraire englobe toute variante entrant dans le cadre défini par les revendications.

Bien que l'on ait illustré des cellules avec un centre occupé par une buse de soufflage et des sommets occupés par des orifices d'aspiration, on pourra bien sûr intervertir de sorte que le centre soit occupé par un orifice d'aspiration et les sommets occupés par des buses de soufflage. Ainsi, par exemple, on pourra sur les cellules des figures 4 et 5, intervertir les buses de soufflage et les orifices d'aspiration.

On notera que, sur la figure 4, il est tout à fait possible de définir une cellule carrée ayant un centre occupé par un orifice d'aspiration et des sommets occupés par des buses de soufflage, de même qu'à la figure 5, il est possible de définir des cellules triangulaires dont le centre est occupé par un orifice d'aspiration et les sommets occupés par des buses de soufflage.

En outre, bien que l'on n'ait représenté ici qu'une seule chambre, le four peut comporter différentes chambres disposées les unes à la suite des autres, les cartes à circuit imprimé effectuant des séjours de temps déterminé dans chacune des chambres pour être portées successivement à la température correspondante de chacune des chambres, ce qui permet d'assurer une montée et une descente progressive en température des cartes à circuit imprimé.

## Revendications

1. Four de refusion comportant une enceinte (2) délimitée par une paroi interne (3) sur laquelle débouchent des buses de soufflage (8) d'air chaud dans l'enceinte et des orifices d'aspiration (6) de l'air chaud présent dans l'enceinte, les buses de soufflage (8) et les orifices d'aspiration (6) étant séparés, dans lequel les buses de soufflage et les orifices d'aspiration sont disposés sur la paroi interne pour être intercalés les uns par rapport aux autres selon un motif régulier définissant des cellules sans recouvrement ni zone morte, de sorte que chaque cellule comporte un centre et des sommets qui sont communs à des cellules adjacentes, dans laquelle :
- le centre est occupé par une buse de soufflage et les sommets sont occupés par des orifices d'aspiration, ou
- le centre est occupé par un orifice d'aspiration et les sommets sont occupés par des buses de soufflage ;
**caractérisé en ce que** les buses de soufflage (8) et les orifices d'aspiration (6) sont disposés selon un motif formant des cellules hexagonales.

2. Four selon la revendication 1, **caractérisé en ce que** les buses de soufflage (8) ont un diamètre de 10 mm et les orifices d'aspiration ont un diamètre de 8 mm selon un pas de 32 mm.

## Claims

1. A reflow oven comprising an enclosure (2) defined by an inside wall (3) having opening out therein blow nozzles (8) for blowing hot air into the enclosure and suction orifices (6) for sucking out the hot air present in the enclosure, the blow nozzles (8) and the suction orifices (6) being separate, the blow nozzles and the suction orifices being disposed over the inside wall so as to be interleaved relative to one another in a regular pattern defining cells without overlap and without any dead zone, such that, each cell has a center and vertices that are common with adjacent cells, in which:
• the center is occupied by a blow nozzle and the vertices are occupied by suction orifices; or
• the center is occupied by a suction orifice and the vertices are occupied by blow nozzles, **characterized in that** the blow nozzles (8) and the suction orifices (6) are disposed in a pattern forming hexagonal cells.

2. An oven according to claim 3, **characterized in that** the blow nozzles (8) have a diameter of 10 mm and the suction orifices have a diameter of 8 mm at a pitch of 32 mm.

## Patentansprüche

1. Reflow-Ofen, umfassend eine Kammer (2), die von einer Innenwand (3) begrenzt ist, an der Blasdüsen (8) zum Einblasen von Heißluft in die Kammer und Ansaugöffnungen (6) zum Ansaugen der in der Kammer vorhandenen Heißluft münden, wobei die Blasdüsen (8) und die Ansaugöffnungen (6) voneinander getrennt sind, wobei die Blasdüsen und die Ansaugöffnungen derart an der Innenwand angeordnet sind, dass sie zueinander versetzt in einem regelmäßigen Muster angeordnet sind, das Zellen ohne Überschneidung und ohne Totraum definiert, derart, dass jede Zelle ein Zentrum und Eckpunkte umfasst, die angrenzenden Zellen gemeinsam sind, wobei:
- das Zentrum von einer Blasdüse eingenommen wird und die Eckpunkte von Ansaugöffnungen eingenommen werden, oder
- das Zentrum von einer Ansaugöffnung eingenommen wird und die Eckpunkte von Blasdüsen eingenommen werden,
**dadurch gekennzeichnet, dass** die Blasdüsen (8) und die Ansaugöffnungen (6) in einem Muster angeordnet sind, das hexagonale Zellen bildet.

2. Ofen nach Anspruch 1, **dadurch gekennzeichnet, dass** die Blasdüsen (8) einen Durchmesser von 10 mm und die Ansaugöffnungen einen Durchmesser von 8 mm mit einer Schrittweite von 32 mm haben.
